# EUROPEAN PATENT SPECIFICATION

(11) **EP 4 262 404 B1**
(45) Date of publication and mention of the grant of the patent: **09.04.2025**
(21) Application number: 21840557.9
(22) Date of filing: 17.12.2021
(51) Int. Cl.: A22B 5/00, A22B 5/20

(54) **TAIL CUTTER FOR SAVING AND PARTLY CUTTING FREE TAILS OF SLAUGHTERED ANIMALS**
SCHWANZSCHNEIDER ZUM ERHALTEN UND TEILWEISEN ABSCHNEIDEN FREIER SCHWÄNZE VON GESCHLACHTETEN TIEREN
UNITÉ DE COUPE DE QUEUE POUR SAUVEGARDER ET COUPER PARTIELLEMENT DES QUEUES LIBRES D'ANIMAUX ABATTUS

(30) Priority: 18.12.2020 EP 20215267
(43) Date of publication of application: 25.10.2023
(73) Proprietor: Marel Red Meat B.V., 7131 PG Lichtenvoorde (NL)
(72) Inventor: GOLDEWIJK, Richard Antonius Maria klein, 7131 PG Lichtenvoorde (NL); HUININK, Maarten Christiaan, 7131 PG Lichtenvoorde (NL)
(74) Representative: Guardian IP Consulting I/S
(86) International application number: PCT/EP2021/086369
(87) International publication number: WO 2022/129452

(56) References cited:
- EP-A1- 0 258 939
- EP-A1- 0 457 409
- EP-A1- 3 659 441
- DE-A1- 2 452 780
- DE-A1- 3 247 588
- US-A- 2 964 784

## Description

### Field of the invention:

The present invention relates to a tail cutter for saving and partly cutting free tails of carcasses of slaughtered animals e.g. of pigs, to a splitting saw comprising the tail cutter and to a method for cutting off a tail of a slaughtered animal. A tail saver or finger located on the tail cutter secures the partly cut free and later cut off tail includes the entire tail or entire tail part as present on the entire carcass of a slaughtered animal.

### Background

Tails of slaughtered animals such as pig and cattle tails have a value as food. This value may be higher if the tail is an entire tail and/or is cut in a straight direction transverse of the direction of the length of the tail, and if no damage is made along the tail length during cutting off the tail.

US 2964784 relates to a decapitator and tail cutter that comprises an L-shaped angle iron having a horizontally positioned base and a vertically disposed flange extended upwardly from one edge of the base.

DE 3247588A1 discloses device for automatically bisecting the suspended bodies of slaughtered animals, especially pigs, by means of saws which progress in the longitudinal direction of the animal carcasses. To keep the carcasses steady, at least two holding rollers are provided which are arranged on both sides of the carcass to be bisected.

When splitting a carcass of a slaughtered animal along the spine such as with a splitting saw, the tail may be cut into two by a longitudinally cut through the bones of the tail or through a part of the tail splitting the tail into two longitudinal sections or at least cutting away a part of the tail by a partly longitudinal cut. Hereby the tail is of nearly no value, at least not the value obtainable when sold for human consumption.

Another possibility when splitting a carcass of a slaughtered animal along the spine is to cut on one side of the tail when cutting along the area where the tail is located hereby obtaining the tail on one of the half parts of the split carcass, but also obtaining a non-straight cutting of the back of the carcass in the area where the tail is located, hereby cutting some ham meat from the ham at the side where the tail is cut free. Removing meat from the ham part reduces the ham weight and thus the value of this part.

Yet a further possibility when splitting a carcass with a splitting saw is to push the tail to a side and with a tail cutter make a cut along the base of the tail before the carcass is split by a saw. Such a tail cutter has been observed having a protruding finger bent slightly to one side to direct the tail to the opposite side before cutting tail free. However, the knife of this tail cutter is not in the same plane as the saw splitting the back of the carcass resulting in a tail cut not at the base of the tail, but further up along the tail in the direction of the tail tip, and therefore the tail cutter does not make a high quality cut of the tail when cutting off the tail and leaving the tail attached to one of the half carcasses. The cut frequently is made at an angle to the longitudinal direction of the tail, thus cutting across several of the tail bones. Furthermore no adjustment of the tail knife is possible.

The invention described herein is the kind of tail cutter controlling the movement of the tail or tail part located on the carcass before and/or while making a cut at the base part of the tail bone shortly before a saw is used to split the carcass into two halves. The partly cut off tail is cut such that the quality of the tail is improved, hereby increasing the value of the tail when sold for human consumption.

### Description of the invention

In a first aspect the invention relates to a tail cutter suitable for being connected to a cutting device for splitting animal carcasses according to claim 1, the tail cutter being capable of partly cutting free the tail of an animal carcass while the cutting device is cutting the back of an animal carcass into two halves, the tail cutter comprises
- a tail knife with a longitudinal cutting blade for cutting free part of the tail at the base part of the tail,
- a finger connected to the tail knife, the finger being capable of directing the loose part of the tail to a predetermined side of the animal carcass,
- the finger is bent to the right or left relative to the longitudinal direction of the cutting blade of the tail knife, and
- the cutting blade of the tail knife is located in line with and/or in the same plane as the cutting device when the tail knife is located on this cutting device.

The tail cutter may be used for partly cutting free tails of carcasses of slaughtered animals, such as pig carcasses which may be hanging in the hind legs with head downwards. Before splitting the carcass and partly cutting free the tail, the carcasses are opened along the ventral side and preferably the intestines are removed including the bung (anal opening). Carcasses to be processed may be conveyed by a conveyor system towards a location where the carcass is to be split or the carcass may be located in an area where multiple processes are performed on each carcass. When the dorsal part of the carcass is to be cut i.e. split by a longitudinal cut from the back end of the carcass towards the head part this is performed by a cutting device for splitting animal carcasses, which is directed towards the spine from the ventral side of the carcass i.e. the cutting device is located inside the open carcass. The tail cutter as described herein may be connected to the cutting device to partly cut free the tail. The tail is partly cut free by cutting partly around the base end of the tail and performing a substantially straight vertical cut of the tail bones, where vertical is in relation to an axis through the length of the tail, by such a cut high quality tails are obtained.

By 'partly cutting free the tail' is meant the tail cutter cuts on one side of the tail relative to the longitudinal cut performed to split the carcass into two half carcass parts. The tail cutter also cuts through the tail by a substantially transverse cut relative to a longitudinal axis going through the bones in the tail. Hereby the tail is cut free from one half part of the carcass and the tail is left connected on the other half part of the split carcass. Hereby 'partly cut free tail' means the tail is completely cut off the one half carcass part and still connected to the other half carcass part. This connection is obtained by not cutting through the skin on one side of the tail meaning the connection itself consists of the skin, fat and other tissue structures located around the base part of the tail.

The tail knife of the tail cutter comprises a longitudinal cutting blade and is preferably stationary or fixed meaning not moving by itself. The cutting blade is preferably beveled, and preferably it is also plain in the longitudinal direction.

A finger is connected to the tail knife and the finger is bent towards the right or left side relative to the longitudinal direction of the cutting blade of the tail knife. The finger will during processing i.e. before and/or during cutting a tail direct the loose tail part to the other side as it is itself bent towards i.e. if the finger is bent to right the loose tail part is directed to the left. By directing the loose tail part to a side the tail knife is not cutting into the tail except at the base part of the tail where it is connected to the ham part of the animal carcass. By choosing the direction the finger is bent towards determines which half-part carcass the partly cut free tail will be connected to after performing the cutting and the splitting of the carcass.

The cutting blade of the tail knife is located in line with and/or in the same plane as the cutting device when the tail knife is located on this cutting device. Being more specific, it is the cutting edges of the tail knife and the cutting device (blade of the splitting saw) which are in the same line/plane. The result obtained hereby is that the cut made by the cutting blade of the tail knife is straight and/or follows the plane of the cutting device and hereby it does not damage the ham, by cutting too far away from the tail basis or it reduces cutting into ham meat when compared to cutting with prior art tail cutters. At least for some markets, the value of the meat is higher when it is located on the ham than if the same amount of meat is located on the tail.

By 'the tail knife is located on the cutting device' is meant the tail knife is located close to the cutting device e.g. in front of the cutting device when the splitting device is in a position as when processing a pig hanging in its hind legs. The physical connection for locating the tail knife relative to the cutting device is preferably between the tail knife or a holder of the tail cutter and the splitting device.

The finger of the tail cutter is located with an angle A to the cutting blade of the tail knife of about 90-160 degree, such as 110-130 degree. The angle A is from the cutting blade and to the edge of the finger that is closest to the knife blade of the tail cutter.

The finger of the tail cutter is bent to a side and is on this side located with an angle B to the rest of the tail cutter of about 130-180 degree, such as 150-170 degree.

The finger of the tail cutter comprises a finger tip and the finger is bent to a side such that the finger tip is between 1 and 3 cm displaced perpendicularly from a cutting plane performed by the cutting device. As the cutting blade of the tail knife and the cutting blade of the cutting device is in the same line/plane the finger tip may also be displaced between 1 and 3 cm perpendicularly from the plane of the cutting blade of the tail cutter. The finger is preferably 5-15 cm long measured from the egde of the cutting blade of the tail knife. The cutting blade of the tail knife may be 4-10 cm long. All these dimensions are preferably selected in relation to the size of the animal carcasses to be processed. As an example, for pigs the mentioned dimensions - or some of these dimensions - should be larger for large pigs such as sows than for young pigs brought up only for meat production.

The tail knife may be connected to a holder suitable for holding the tail knife in position relative to the cutting device (blade of the splitting saw). The holder connects the tail knife to the cutting device or more precisely to the equipment or system with a cutting saw or blade for cutting the carcass into two half-carcasses. The holder is preferably located above the cutting device when positioned as during processing carcasses and the holder is preferably connected to the splitting device above the cutting device. The holder may be located on one side or on both sides of the tail knife and hold the tail knife in position.

The holder and/or the tail knife may comprise adjusting means and be adjusted to position the tail knife in line with the cutting device and/or in the same plane as the cutting device. The effect of this is if deciding to use a cutting device of a different size, then the tail cutter can still be positioned in line with/in the same plane as the cutting device. Thus, if a larger cutting device is to be used the tail cutter or the tail knife should be re-positioned and be further away from e.g. the midpoint of the cutting blade.

The holder and/or the tail cutter may at least be adjustable in a direction backwards and/or forwards relative to the plane of the cutting blade of the cutting device. The holder and/or the tail cutter may hereby comprise adjusting means for adjusting or re-positioning the tail cutter relative to the size of the cutting device to position the cutting blade of the tail cutter in line with and/or in plane with the cutting device. The tail cutter can also be repositioned e.g. once a day due to wear and hereby smaller diameter of the cutting device.

The tail cutter and/or the holder may also comprise a quick exchange system for disconnecting and connecting the tail knife to the holder or for disconnecting and connecting the holder to the splitting device. The advantage of such a quick exchange system is the tail knife can quickly be exchanged to a tail knife with different dimensions if smaller or larger carcasses in general are to be processed, or the tail knife can quickly be removed if one or a few carcasses conveyed to the splitting station/area is/are of a different size than carcasses processed in general, hereby the carcasses of different size e.g. a carcass from a pig sow located between carcasses from normal sized pigs are not processed by the tail cutter as it may not be suitable to process that size of carcass with a tail cutter suitable for cutting smaller carcasses.

The finger of the tail cutter is preferably dull or not sharp. The advantage hereof is the finger can engage with the tail of the carcass without damaging the tail when the tail is directed toward one side. At least the outermost tip edge and the edge of the finger towards the cutting blade of the tail knife should preferably be dull or not sharp, as these are the edges being mostly in contact with the tail during processing.

The cutting device is preferably a saw blade or a knife blade, and is preferably circular. The cutting device is used for splitting the carcass from one end to the other including splitting the spine into two halves.

A second aspect of the invention relates to a splitting device for splitting carcasses of slaughtered animals, the splitting device may comprise a cutting device such as a saw or knife for splitting the animal along the spine and a tail cutter as described herein for directing the tail to a side and cutting the base part of the tail.

By 'splitting the animal along the spine' is meant the carcass is split into two half-carcasses by splitting the spine into two halves and also splitting at the back end of the carcass and optionally at the head end, if present, of the carcass where the spine is not present.

The splitting device may be connected to an automatic system for splitting carcasses of slaughtered animals. The splitting device may be used for an automatic single sided pig tail cutting.

The automatic system may comprise at least one robot arm with at least three degree of freedom and/or a system for determining the position of carcasses to be handled, such as a vision system. Also further systems may be included such as an image analyzing system for receiving and analyzing image data of carcasses and carcass positions, a controlling unit for receiving information from the analyzing system and for controlling at least the automatic system to steer and activate the splitting device in relation to the carcasses to be processed.

A third aspect of the invention relates to a method for partly cutting free a tail from a carcass of a slaughtered animal by the use of a tail cutter as described herein or by the use of a splitting device as described herein, wherein the method may comprise the steps of
a) Directing the finger of the tail cutter on a first side of a tail located on a carcass, hereby pushing the tail aside,
b) Cutting by the cutting blade of the tail knife into the skin of the carcass on the first side of the tail,
c) Further cutting by the cutting blade of the tail knife into the carcass around the base part of the tail, and cutting through at least one bone and/or cartilage at the base part of the tail,
d) Hereby partly cutting free the tail from the carcass.

In the described method the partly cut free tail in step d) is preferably connected to the carcass on a second side of the tail, where the second side is opposite to the first side. The tail is preferably then attached to one half carcass by a skin connection. The tail can be cut free in a subsequent step e.g. cut by hand. This cut free tail may be a high-quality tail suitable for human consumption. The tail quality also depends on the quality of the tail of the living animal before slaughter, and the method and devices described herein can be used to obtain a high-quality cut when cutting off the tail at the base part of the tail.

In the method at least part of the spinal column close to the base part of the tail may be cut into two halves before and/or during step a). The spinal column may be cut by the cutting device as described elsewhere. A splitting device as described herein may be used for splitting carcasses and partly cutting free the tail of these carcasses.

In the method the cutting through at least one bone and/or cartilage at the base part of the tail may be cutting through the tailbone or coccyx, which is a curved, semi-flexible lower end of the backbone.

It is to be understood that any features of one aspect may be combined with any feature of another aspect described herein.

### Brief description of the drawings

- Fig. 1: is a perspective view of a splitting device with a tail cutter.
- Fig. 2: is a perspective view of a tail knife.
- Fig. 3: is a view from beneath of a tail knife.
- Fig. 4: is a perspective view from beneath of a tail knife.
- Fig. 5: is a side view of a tail knife.
- Fig. 6: is a side view of a tail cutter.
- Fig. 7: is a front view of a tail cutter.
- Fig. 8A - 8E: illustrate the tail knife saving and cutting a tail of a pig carcass.

### Detailed description of the drawings

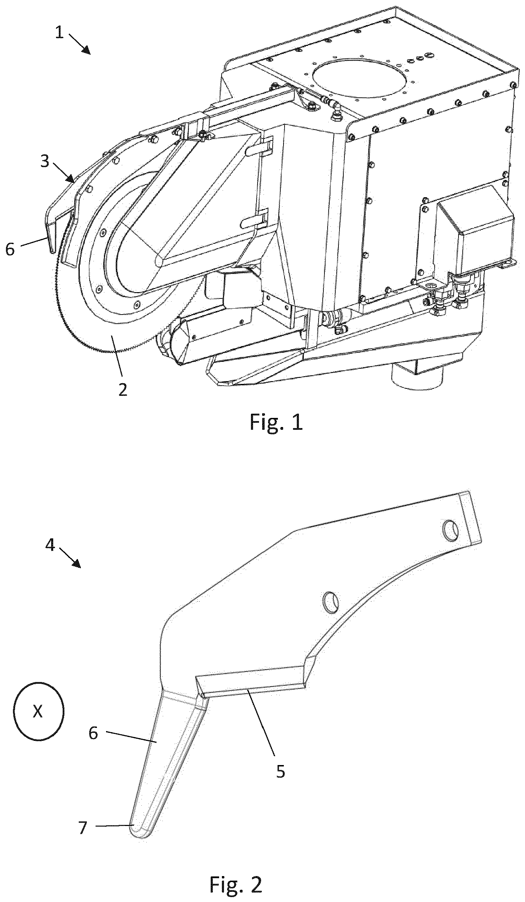

Fig. 1 illustrates a splitting device 1 with a tail cutter 3 located in front of the splitting device 1. The tail cutter 3 is locate above the cutting device 2 of the splitting device 1 and in a way such that the finger 6 of the tail cutter 3 is in front of an upper part of the cutting device 2. The cutting device 2 may be a circular saw blade or knife blade for splitting a carcass by directing the splitting device 1 from the ventral side of the carcass (not illustrated) towards the spine and cutting the spine from the ham end towards the head end of the carcass.

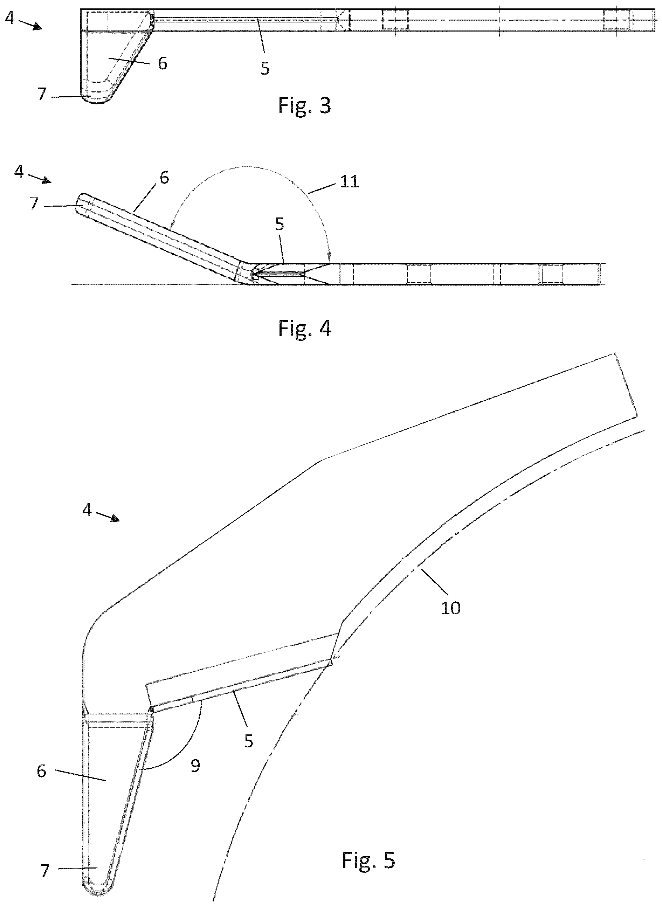

Fig. 2 illustrates a tail knife 4. The tail knife 4 comprises a finger 6 with a finger tip 7 and a cutting blade 5. The finger 6 is bent to the right side relative to the longitudinal direction of the cutting blade 5 and when observed from a position marked by an encircled X in front of the tail knife 4 (see Figs. 3, 4 and 7 below for details). The finger 6 will, when a carcass is processed, be directed to the right side of a tail (not illustrated) such that the tail will be directed to the left side, and the cutting blade 5 will cut at the base part of the tail along the right side of the tail. The encircled cross illustrate a position in front of the tail knife 4 and from where right and left is determined in the text.

Fig. 3 illustrates a tail knife 4 seen from beneath and looking towards the cutting blade 5. Illustrated is the longitudinal cutting blade 5 and the finger 6 which is bent to a side. The finger tip 7 is rounded to avoid sharp edges

Fig. 4 illustrates a tail knife 4 seen from beneath and looking towards the finger 6. The finger tip 7 and the cutting blade 5 are illustrated. The figure illustrates how the finger is bent to a side and an angle B 11 between the finger 6 and the base part of the cutting blade 5.

Fig. 5 is a side view of a tail knife 4. Indicated is the angle A 9 between the cutting blade 5 and the finger 6. Indicated is also the outline 10 of a part of a cutting device 2 such as a saw blade.

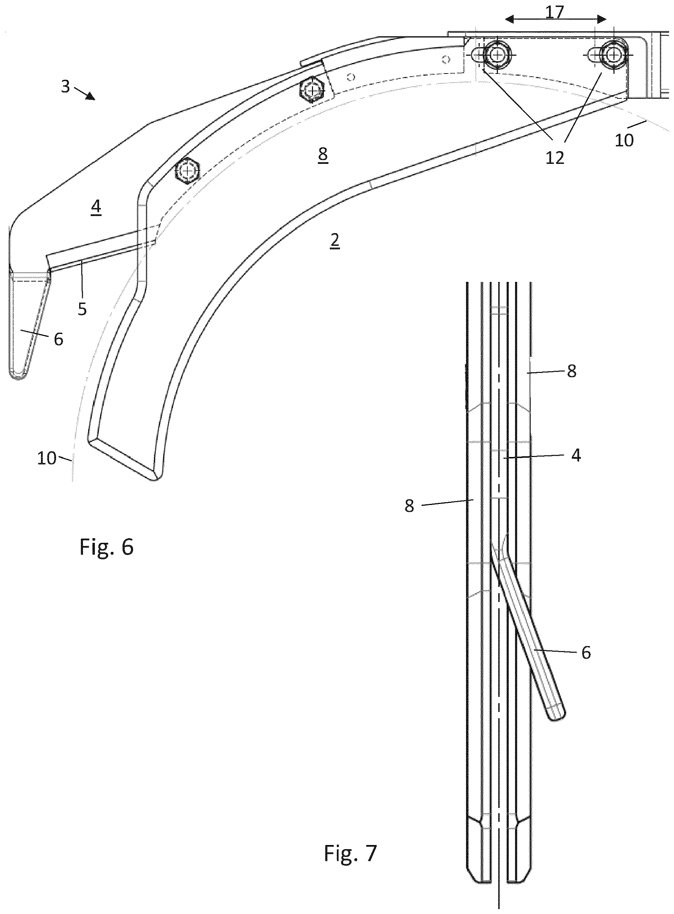

Fig. 6 is a side view of a tail cutter 3. A holder 8 is holding a tail knife 4. The outline 10 indicates where a part of the cutting blade of a cutting device 2 is located when the tail cutter 3 is positioned correct such that the cutting blade 5 is in line with or in the same plane as the cutting device 2. Adjusting means 12 can be used to adjust the position of the tail cutter 3 on a splitting device (not illustrated). As indicated by the double arrow 17 the tail cutter 3 can be moved forward i.e. to the left or backward i.e. to the right by adjusting in the adjusting means 12, which in this solution is adjusting along oblong apertures present in the holder 8 and/or in the part connecting the tail cutter 3 to the splitting device.

Fig. 7 is a front view of a tail cutter 3. A holder 8 is located on both side of the tail knife 4 and a cutting device illustrated by the outline 10. The finger 6 is bent to a side.

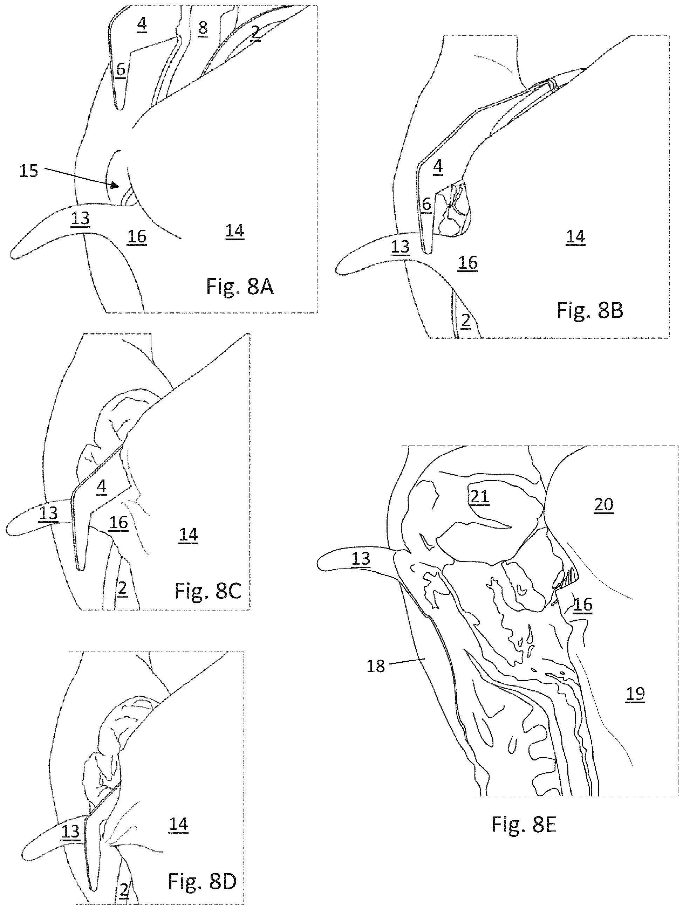

Fig. 8A - 8E illustrate the tail knife 4 saving and cutting a tail 13 of a pig carcass 14. The pig carcass 14 has prior to the splitting process been opened in the ventral part and intestines have been removed including the bung (anal opening) leaving an opening 15 next to the basis of the tail. The splitting device is during the process entered towards the carcass 14 from the ventral side and cutting the spine from the inside of the carcass 14. In Fig 8A the tail knife 4 with a finger 6, a holder 8 and a cutting device 2 is shown just prior to or when the cutting device 2 starts cutting into the ham part of the carcass 14. As seen the tail knife 4 and its finger 6 is positioned in front of the cutting device 2 hereby in position to engage with the tail 13. In Fig 8B the cutting device 2 is or has cut the ham section and a part of the cutting device 2 can be seen where the bung opening 15 is present. The finger 6 of the tail knife 4 is directed on the right side of the tail 13. In Fig 8C the cutting device 2 has cut pass the tail 13 without cutting into the tail 13, the finger 6 is directing the tail 13 to the left side and the tail knife 4 is engaged with the tail 13 and about to cut through the tail 13 at the base part 16 of the tail 13 and on the right side of the tail 13. In Fig 8D the tail knife 4 is cutting with the cutting blade (hidden) through the base part 16 or the tail 13 while the tail knife 4 continues to hold the tail 13 at a side hereby saving the tail 13 from being damaged or cut with a low-quality cut. Fig 8E shows the saved i.e. non-damaged and partly cut free tail 13 being located on one of the half carcass, the first half carcass 18, after the splitting is completed. The ham part 20 of the first half carcass 18 is indicated as is also the ham part 20 of the second half carcass 19. No tail parts are left on the second half carcass 19, where the base part 16 of the tail 13 is indicated although the tail 13 is cut away from the second half carcass 19. The tail 13 can in a subsequent process be cut off the first half carcass 18, this can easily be performed by hand as the tail 13 is connected to the half carcass by skin, fat and other tissue structures being present at the base part of the tail 16 before cutting.

It should be understood that the detailed description and specific examples, while indicating embodiments of the invention, are given by way of illustration only, since various changes and modifications within the scope of the invention as defined in the appended claims will become apparent to those skilled in the art from this detailed description.

## Claims

1. A tail cutter (3) comprising
• a tail knife (4) with a longitudinal cutting blade (5) for cutting free part of the tail at the base part of the tail,
**characterized in that** the tail cutter is suitable for being connected to a cutting device (2) for splitting animal carcasses, the tail cutter (3) being capable of partly cutting free the tail of an animal carcass while the cutting device (2) is cutting the back of an animal carcass into two halves, that the tail cutter (3) further comprises:
• a finger (6) connected to the tail knife (4), the finger (6) being capable of directing the loose part of the tail to a predetermined side of the animal carcass,
• the finger (6) is bent to the right or left relative to the longitudinal direction of the cutting blade (5) of the tail knife (4), and
• that the tail cutter is configured such that, when the tail cutter is connected to a cutting device, the cutting blade (5) of the tail knife (4) is located in line with and/or in the same plane as the cutting device (2) when the tail knife (4) is located on this cutting device (2).

2. The tail cutter (3) according to claim 1, wherein the finger (6) is located with an angle A to the cutting blade (5) of the tail knife (4) of about 90-160 degree, such as 110-130 degree.

3. The tail cutter (3) according to claim 1 or 2, wherein the finger (6) comprises a finger tip (7) and the finger (6) is bent to a side such that the finger tip (7) is between 1 and 3 cm displaced perpendicularly from a cutting plane performed by the cutting device (2).

4. The tail cutter (3) according to any of the preceding claims, wherein the tail knife (4) is connected to a holder (8) suitable for holding the tail knife (4) in position relative to the cutting device (2).

5. The tail cutter (3) according to claim 4, wherein the holder (8) and/or the tail cutter (3) comprises adjusting means (12) and is adjustable to position the tail cutter (3) in line with the cutting device (2), such as when using a cutting device (2) of a different size.

6. The tail cutter (3) according to claim 5, wherein the holder (8) and/or the tail cutter (3) is adjustable in a direction backwards and/or forwards relative to the plane of the cutting device (2).

7. The tail cutter (3) according to any of the preceding claims, wherein the finger (6) is dull or not sharp.

8. The tail cutter (3) according to any of the preceding claims, wherein the cutting device (2) is a saw blade or a knife blade, such as a circular saw blade or a circular knife blade.

9. The tail cutter (3) according to any of the preceding claims, further comprising a quick exchange system for disconnecting and connecting the tail cutter (3) to the holder (8) or for disconnecting and connecting the holder (8) to the splitting device (1).

10. A splitting device (1) for splitting carcasses of slaughtered animals, the splitting device (1) comprising
• A cutting device (2) for splitting the carcass along the spine and
• a tail cutter (3) according to any of the claims 1 to 9 for directing the tail to a side and cutting the base part of the tail.

11. The splitting device (1) according to claim 10, wherein the splitting device (1) is connected to an automatic system for splitting carcasses of slaughtered animals.

12. The splitting device (1) according to claim 11, wherein the automatic system comprises at least one robot arm with at least three degree of freedom and/or a system for determining the position of carcasses to be handled, such as a vision system.

13. A method for partly cutting free a tail from a carcass of a slaughtered animal **characterized in that** said partly cutting free of the tail is by the use of a tail cutter (3) according to any of the claims 1 to 9 or by the use of a splitting device (1) according to any of the claims 10 to 12, and that the method comprises the steps of
a) Directing the finger (6) of the tail cutter on a first side of a tail located on a carcass, hereby pushing the tail aside,
b) Cutting by the cutting blade (5) of the tail knife (4) into the skin of the carcass on the first side of the tail,
c) Further cutting by the cutting blade (5) of the tail knife (4) into the carcass around the base part of the tail, and cutting through at least one bone and/or cartilage at the base part of the tail,
d) Hereby partly cutting free the tail from the carcass.

14. The method according to claim 13, wherein the partly cut free tail in step d) is connected to the carcass on a second side of the tail, where the second side is opposite to the first side.

15. The method according to any of claim 13 or 14, wherein at least part the spinal column close to the base part of the tail is cut into two halves before and/or during step a).

## Patentansprüche

1. Schwanzschneider (3), umfassend
- ein Schwanzmesser (4) mit einer Längsschneidklinge (5) zum Schneiden eines freien Teils des Schwanzes am Schwanzbasisteil,
**dadurch gekennzeichnet, dass** der Schwanzschneider zum Verbinden mit einer Schneidvorrichtung (2) zum Zerteilen von Tierkadavern geeignet ist, wobei der Schwanzschneider (3) in der Lage ist, den Schwanz eines Tierkadavers teilweise freizuschneiden, während die Schneidvorrichtung (2) den Rücken eines Tierkadavers in zwei Hälften schneidet, dadurch, dass der Schwanzschneider (3) weiter umfasst:
- einen Finger (6), der mit dem Schwanzmesser (4) verbunden ist, wobei der Finger (6) in der Lage ist, den losen Teil des Schwanzes auf eine vorbestimmte Seite des Tierkadavers zu richten,
- der Finger (6) in Bezug zur Längsrichtung der Schneidklinge (5) des Schwanzmessers (4) nach rechts oder links gebogen ist, und
- dass der Schwanzschneider konfiguriert ist, sodass, wenn der Schwanzschneider mit einer Schneidvorrichtung verbunden ist die Schneidklinge (5) des Schwanzmessers (4) sich in einer Linie mit und/oder in der gleichen Ebene wie die Schneidvorrichtung (2) befindet, wenn sich das Schwanzmesser (4) an dieser Schneidvorrichtung (2) befindet.

2. Schwanzschneider (3) nach Anspruch 1, wobei sich der Finger (6) in einem Winkel A zur Schneidklinge (5) des Schwanzmessers (4) von etwa 90-160 Grad, wie beispielsweise 110-130 Grad befindet.

3. Schwanzschneider (3) nach Anspruch 1 oder 2, wobei der Finger (6) eine Fingerspitze (7) umfasst und der Finger (6) auf eine Seite gebogen ist, sodass die Fingerspitze (7) zwischen 1 und 3 cm senkrecht von einer durch die Schneidvorrichtung (2) ausgeführten Schneidebene verschoben ist.

4. Schwanzschneider (3) nach einem der vorstehenden Ansprüche, wobei das Schwanzmesser (4) mit einem Halter (8) verbunden ist, der zum Halten des Schwanzmessers (4) in Position in Bezug zur Schneidvorrichtung (2) geeignet ist.

5. Schwanzschneider (3) nach Anspruch 4, wobei der Halter (8) und/oder der Schwanzschneider (3) Anpassungsmittel (12) umfasst und anpassbar ist, um den Schwanzschneider (3) in einer Linie mit der Schneidvorrichtung (2) zu positionieren, wie wenn beispielsweise eine Schneidvorrichtung (2) einer anderen Größe verwendet wird.

6. Schwanzschneider (3) nach Anspruch 5, wobei der Halter (8) und/oder der Schwanzschneider (3) in einer Rückwärtsrichtung und/oder Vorwärtsrichtung in Bezug zur Ebene der Schneidvorrichtung (2) anpassbar sind/ist.

7. Schwanzschneider (3) nach einem der vorstehenden Ansprüche, wobei der Finger (6) stumpf oder nicht scharf ist.

8. Schwanzschneider (3) nach einem der vorstehenden Ansprüche, wobei die Schneidvorrichtung (2) ein Sägeblatt oder ein Messerblatt, wie beispielsweise ein Kreissägeblatt oder ein Kreismesserblatt, ist.

9. Schwanzschneider (3) nach einem der vorstehenden Ansprüche, der weiter ein Schnellwechselsystem zum Trennen und Verbinden des Schwanzschneiders (3) mit dem Halter (8) oder zum Trennen und Verbinden des Halters (8) mit der Spaltvorrichtung (1) umfasst.

10. Spaltvorrichtung (1) zum Spalten von Schlachttierkadavern, wobei die Spaltvorrichtung (1) umfasst
- eine Schneidvorrichtung (2) zum Spalten des Kadavers entlang der Wirbelsäule und
- einen Schwanzschneider (3) nach einem der Ansprüche 1 bis 9 zum Richten des Schwanzes auf eine Seite und Schneiden des Basisteils des Schwanzes.

11. Spaltvorrichtung (1) nach Anspruch 10, wobei die Spaltvorrichtung (1) mit einem automatischen System zum Spalten von Schlachttierkadavern verbunden ist.

12. Spaltvorrichtung (1) nach Anspruch 11, wobei das automatische System zumindest einen Roboterarm mit zumindest drei Freiheitsgraden umfasst und/oder ein System zum Bestimmen der Position von zu handhabenden Kadavern, wie beispielsweise ein Vision-System.

13. Verfahren zum teilweisen Freischneiden eines Schwanzes von einem Schlachttierkadaver, **dadurch gekennzeichnet, dass** das teilweise Freischneiden des Schwanzes durch die Verwendung eines Schwanzschneiders (3) nach einem der Ansprüche 1 bis 9 oder durch die Verwendung einer Spaltvorrichtung (1) nach einem der Ansprüche 10 bis 12 erfolgt, und dadurch, dass das Verfahren die Schritte umfasst zum
a) Richten des Fingers (6) des Schwanzschneiders auf eine erste Seite eines an einem Schlachtkörper befindlichen Schwanzes, wodurch der Schwanz beiseite gedrückt wird,
b) Schneiden der Schneidklinge (5) des Schwanzmessers (4) in die Haut des Kadavers auf der ersten Seite des Schwanzes,
c) weiteres Schneiden mit der Schneidklinge (5) des Schwanzmessers (4) in den Kadaver um den Basisteil des Schwanzes herum und Schneiden durch zumindest einen Knochen und/oder Knorpel am Basisteil des Schwanzes,
d) wodurch der Schwanz teilweise vom Kadaver freigeschnitten wird.

14. Verfahren nach Anspruch 13, wobei der in Schritt d) teilweise abgeschnittene Schwanz auf einer zweiten Seite des Schwanzes mit dem Kadaver verbunden ist, wobei die zweite Seite der ersten Seite gegenüberliegt.

15. Verfahren nach Anspruch 13 oder 14, wobei zumindest ein Teil der Wirbelsäule nahe dem Basisteil des Schwanzes vor und/oder während Schritt a) in zwei Hälften geschnitten wird.

## Revendications

1. Coupe-queue (3) comprenant
- un couteau de queue (4) avec une lame de coupe longitudinale (5) pour couper la partie libre de la queue au niveau de la partie de base de la queue,
**caractérisé en ce que** le coupe-queue est adapté pour être connecté à un dispositif de coupe (2) pour fendre des carcasses d'animaux, le coupe-queue (3) étant capable de couper partiellement la queue d'une carcasse d'animal pendant que le dispositif de coupe (2) coupe le dos d'une carcasse d'animal en deux moitiés, **en ce que** le coupe-queue (3) comprend en outre :
- un doigt (6) connecté au couteau de queue (4), le doigt (6) étant capable de diriger la partie détachée de la queue vers un côté prédéterminé de la carcasse d'animal,
- le doigt (6) est plié vers la droite ou vers la gauche par rapport à la direction longitudinale de la lame de coupe (5) du couteau de queue (4), et
- **en ce que** le coupe-queue est configuré de telle sorte que, lorsque le coupe-queue est connecté à un dispositif de coupe, la lame de coupe (5) du couteau de queue (4) se trouve en ligne avec et/ou dans le même plan que le dispositif de coupe (2) lorsque le couteau de queue (4) se trouve sur ce dispositif de coupe (2).

2. Coupe-queue (3) selon la revendication 1, dans lequel le doigt (6) se trouve à un angle A par rapport à la lame de coupe (5) du couteau de queue (4) d'environ 90-160 degrés, tel que 110-130 degrés.

3. Coupe-queue (3) selon la revendication 1 ou 2, dans lequel le doigt (6) comprend une pointe de doigt (7) et le doigt (6) est plié vers un côté de telle sorte que la pointe de doigt (7) soit déplacée entre 1 et 3 cm perpendiculairement à partir d'un plan de coupe réalisé par le dispositif de coupe (2).

4. Coupe-queue (3) selon l'une quelconque des revendications précédentes, dans lequel le couteau de queue (4) est connecté à un support (8) adapté pour maintenir le couteau de queue (4) en position par rapport au dispositif de coupe (2).

5. Coupe-queue (3) selon la revendication 4, dans lequel le support (8) et/ou le coupe-queue (3) comprennent des moyens de réglage (12) et sont ajustables pour positionner le coupe-queue (3) en ligne avec le dispositif de coupe (2), comme lors de l'utilisation d'un dispositif de coupe (2) d'une taille différente.

6. Coupe-queue (3) selon la revendication 5, dans lequel le support (8) et/ou le coupe-queue (3) sont ajustables dans la direction vers l'arrière et/ou vers l'avant par rapport au plan du dispositif de coupe (2).

7. Coupe-queue (3) selon l'une quelconque des revendications précédentes, dans lequel le doigt (6) est émoussé ou non tranchant.

8. Coupe-queue (3) selon l'une quelconque des revendications précédentes, dans lequel le dispositif de coupe (2) est une lame de scie ou une lame de couteau, telle qu'une lame de scie circulaire ou une lame de couteau circulaire.

9. Coupe-queue (3) selon l'une quelconque des revendications précédentes, comprenant en outre un système d'échange rapide pour déconnecter et connecter le coupe-queue (3) au support (8) ou pour déconnecter et connecter le support (8) au dispositif de fendage (1).

10. Dispositif de fendage (1) pour fendre des carcasses d'animaux abattus, le dispositif de fendage (1) comprenant
- un dispositif de coupe (2) pour fendre la carcasse le long de la colonne vertébrale et
- un coupe-queue (3) selon l'une quelconque des revendications 1 à 9 pour diriger la queue vers un côté et couper la partie de base de la queue.

11. Dispositif de fendage (1) selon la revendication 10, dans lequel le dispositif de fendage (1) est connecté à un système automatique de fendage de carcasses d'animaux abattus.

12. Dispositif de fendage (1) selon la revendication 11, dans lequel le système automatique comprend au moins un bras de robot avec au moins trois degrés de liberté et/ou un système permettant de déterminer la position des carcasses à manipuler, tel qu'un système de vision.

13. Procédé pour couper partiellement une queue d'une carcasse d'un animal abattu, **caractérisé en ce que** ladite coupe partielle de la queue est réalisée à l'aide d'un coupe-queue (3) selon l'une quelconque des revendications 1 à 9 ou à l'aide d'un dispositif de fendage (1) selon l'une quelconque des revendications 10 à 12, et **en ce que** le procédé comprend les étapes consistant à
a) diriger le doigt (6) du coupe-queue sur un premier côté d'une queue située sur une carcasse, poussant ainsi la queue sur le côté,
b) couper par la lame de coupe (5) du couteau de queue (4) dans la peau de la carcasse du premier côté de la queue,
c) couper davantage par la lame de coupe (5) du couteau de queue (4) dans la carcasse autour de la partie de base de la queue, et couper à travers au moins un os et/ou un cartilage au niveau de la partie de base de la queue,
d) couper ainsi partiellement la queue de la carcasse.

14. Procédé selon la revendication 13, dans lequel la queue partiellement coupée à l'étape d) est connectée à la carcasse d'un second côté de la queue, le second côté étant opposé au premier côté.

15. Procédé selon l'une quelconque des revendications 13 ou 14, dans lequel au moins une partie de la colonne vertébrale proche de la partie de base de la queue est coupée en deux moitiés avant et/ou pendant l'étape a).
